# FASCICULE DE BREVET EUROPEEN

(11) **EP 0 704 359 B1**
(45) Date de publication et mention de la délivrance du brevet: **02.06.1999**
(21) Numéro de dépôt: 95115043.2
(22) Date de dépôt: 25.09.1995
(51) Int. Cl.: B60S 1/34

(54) **Mécanisme d'essuie-glace du type à balayage non circulaire**
Scheibenwischermechanismus mit nichtkreisförmigem Wischfeld
Windscreen wiper mechanism with non-circular wiping pattern

(30) Priorité: 29.09.1994 FR 9411661
(43) Date de publication de la demande: 03.04.1996
(73) Titulaire: VALEO SYSTEMES D'ESSUYAGE, 78321 La Verrière (FR)
(72) Inventeur: Eustache, Jean-Pierre, F-92160 Antony (FR)
(74) Mandataire: Gamonal, Didier

(56) Documents cités:
- EP-A- 0 147 782
- US-A- 2 516 808
- US-A- 3 570 039

## Description

La présente invention concerne un mécanisme d'essuie-glace pour véhicule automobile.

L'invention concerne plus particulièrement un mécanisme d'essuie-glace du type décrit et représenté dans le document DE-A-3.840.823.

Ce document décrit et représente un mécanisme d'essuie-glace du type comportant un arbre d'entraînement, qui est animé d'un mouvement alternatif en rotation, monté à rotation par rapport à un élément fixe de la structure du véhicule et qui entraîne en rotation un boîtier d'entraînement sur lequel un bras d'essuie-glace, portant une lame d'essuyage, est monté à rotation autour d'un axe parallèle à l'axe de l'arbre d'entraînement et qui contient un mécanisme de transmission comprenant une poulie fixe traversée par l'arbre d'entraînement et fixée à l'élément de structure du véhicule, une poulie mobile liée en rotation à un arbre de sortie du mécanisme qui entraîne le bras d'essuie-glace en rotation, et des moyens de transmission du mouvement entre les deux poulies.

Cette conception permet d'obtenir un mouvement non circulaire de balayage de la vitre à essuyer par le bras d'essuie-glace.

Selon la conception proposée dans le document DE-A-3.840.823, les moyens de transmission synchrone du mouvement entre la poulie fixe et la poulie mobile sont constitués par une courroie crantée de transmission qui coopère avec deux poulies dentées.

Cette conception a pour inconvénient de limiter les possibilités de réglage des positions angulaires respectives des différents composants en fonction du pas des dents de la courroie crantée.

De plus, en cas de blocage momentané de l'un des composants, il peut produire un saut de la courroie crantée aboutissant à un mauvais fonctionnement ultérieur du dispositif du fait du décalage gui en résulte entre les positions angulaires des différents composants.

Selon la conception décrite et représentée dans le document DE-A-645.789, l'élément de transmission de mouvement est un câble souple agencé en boucle autour des deux poulies à profil lisse.

Cette conception ne permet pas d'assurer une transmission parfaitement synchrone du mouvement dans la mesure où il existe une possibilité de glissement du câble en boucle par rapport à l'une et/ou l'autre des deux poulies.

De plus, aucune des deux conceptions qui viennent d'être mentionnées ne permet de réaliser de manière fiable un mécanisme dans lequel les deux poulies sont situées dans des plans décalés axialement afin de conformer le boîtier d'entraînement pour l'essuyage d'une vitre présentant un galbe prononcé.

La présente invention a pour but de proposer une nouvelle conception des moyens de transmission du mécanisme de transmission de mouvement qui permet de remédier aux inconvénients qui viennent d'être mentionnés.

Dans ce but, l'invention propose un mécanisme d'essuie-glace du type de celui décrit et représenté dans le document DE-A-3.840.823, caractérisé en ce que les moyens de transmission comportent au moins une gaine souple portée par le boîtier et un câble monté coulissant dans la gaine et dont chacune des deux extrémités libres est fixée respectivement à chacune des deux poulies.

Selon des modes de réalisation de l'invention:
- chacun des deux tronçons d'extrémité du câble coulissant est reçu dans une gorge de guidage formée dans la poulie correspondante ;
- les gorges des deux poulies sont situées dans des plans décalés axialement ;
- l'une au moins des deux extrémités de la gaine souple est fixée de manière réglable par rapport au corps du boîtier d'entraînement ;
- les moyens de transmission comportent deux câbles de transmission antagonistes agencés symétriquement par rapport à un plan médian du boîtier passant par les axes des poulies ;
- la rotation dans le sens horaire du boîtier d'entraînement par rapport à l'élément de structure du véhicule provoque une rotation dans le sens anti-horaire de l'arbre de sortie par rapport au boîtier contenant le mécanisme de transmission.

D'autres caractéristiques et avantages de l'invention apparaîtront à la lecture de la description détaillée qui va suivre pour la compréhension de laquelle on se reportera aux dessins annexés dans lesquels :
- La figure 1 est un schéma illustrant un pare-brise d'un véhicule équipé d'un essuie-glace classique à balayage circulaire et d'un essuie-glace réalisé conformément aux enseignements de l'invention qui assure un balayage non circulaire ;
- la figure 2 est une vue en section longitudinale selon la ligne 2-2 de la figure 3 qui illustre les principaux composants du mécanisme d'essuie-glace selon l'invention ;
- la figure 3 est une vue de dessus, avec arrachement partiel, du boîtier d'entraînement du mécanisme illustré sur la figure 2 ;
- la figure 4 est une vue de dessus similaire à celle de la figure 3 qui illustre de manière schématique les deux poulies avec les câbles coulissants ;
- la figure 5 est une vue de détails illustrant la fixation d'une extrémité d'une gaine souple.

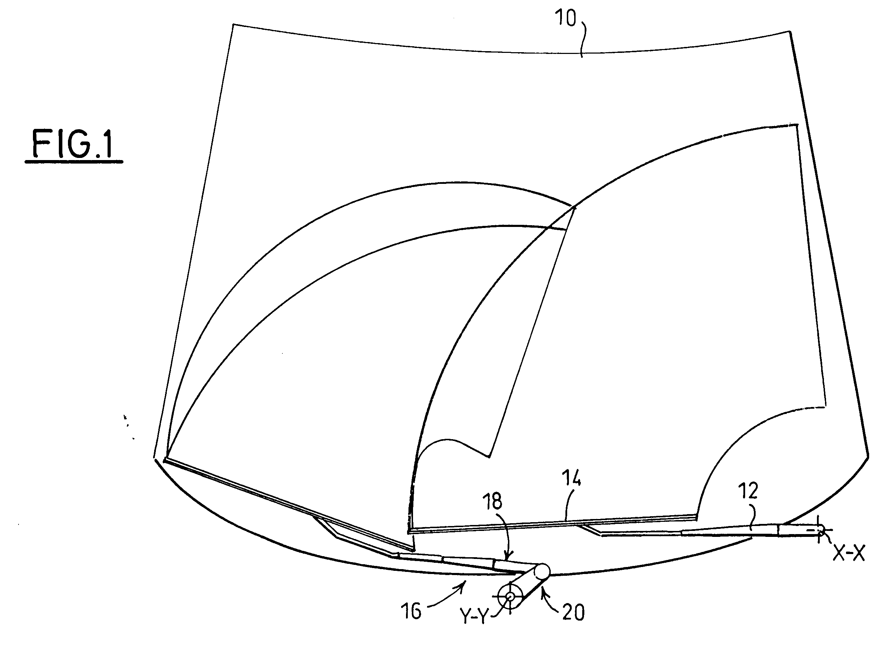

On a représenté sur la figure 1 un pare-brise 10 de véhicule automobile dont l'essuyage est assuré au moyen d'un premier essuie-glace dont le bras 12 porte un balai 14 qui effectue un mouvement de balayage en rotation alternée de la partie de droite du pare-brise 10 autour d'un axe géométrique fixe X-X.

L'essuyage de la partie gauche du pare-brise 10 est assuré au moyen d'un second essuie-glace 16 dont le bras d'essuie-glace 18 est entraîné en rotation non circulaire par l'intermédiaire d'un boîtier d'entraînement 20 lui-même entraîné en rotation alternée autour d'un axe géométrique Y-Y.

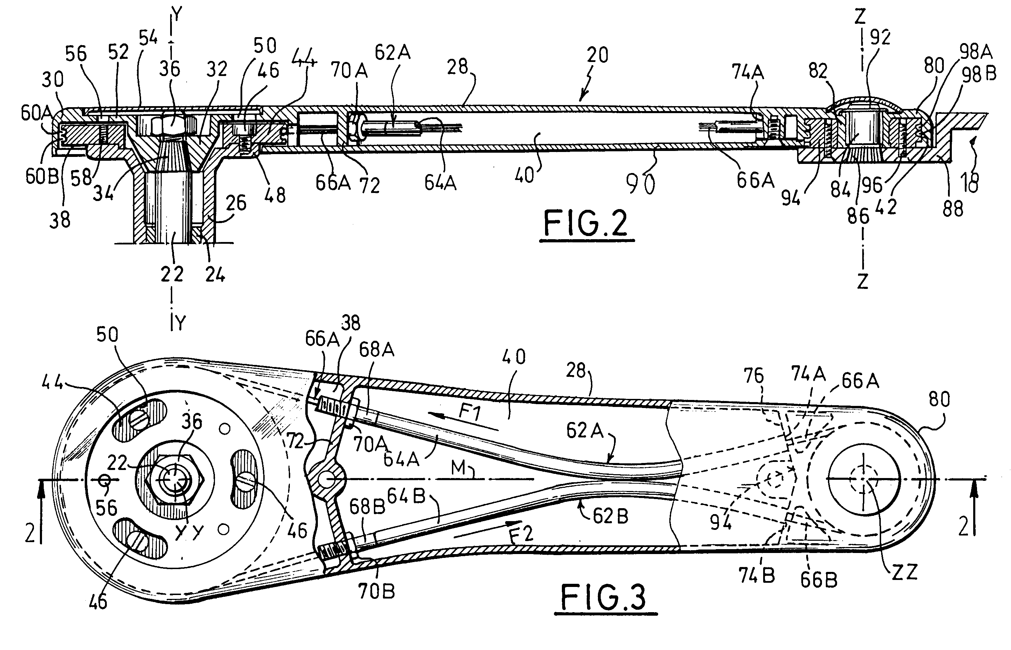

Comme cela est illustré aux figures 2 et 3, le mécanisme de transmission de l'essuie-glace 16 comporte un arbre d'entraînement, ou arbre moteur 22, d'axe de rotation Y-Y qui est monté à rotation, par l'intermédiaire d'une douille de palier 24, dans un fourreau 26 fixé à un élément de structure fixe de la caisse du véhicule (non représenté).

L'arbre d'entraînement 22 entraîne en rotation alternée autour de l'axe Y-Y le boîtier d'entraînement 20 dont le corps 28 s'étend longitudinalement sensiblement dans un plan perpendiculaire à l'axe Y-Y.

L'extrémité 30, à gauche en considérant les figures 2 et 3, du boîtier 20 comporte un manchon 32 réalisé venu de matière par moulage avec le corps 28 et qui est traversé par l'arbre d'entraînement 22.

Une portion conique et moletée 34 de l'arbre 22 traverse un trou complémentaire formé dans le manchon 32 et la liaison en rotation du manchon 32 avec l'arbre 22 est assuré au moyen d'un écrou 36 de serrage axial.

Ainsi, toute rotation, dans l'un ou l'autre sens, de l'arbre d'entraînement 22 entraîne une rotation du boîtier de transmission 20 autour de l'axe Y-Y.

La face inférieure, en considérant la figure 2, du boîtier d'entraînement 20 est une face ouverte du corps creux 28 qui délimite trois logements successif 38, 40 et 42, de la gauche vers la droite en considérant les figures 2 et 3.

Le logement 38 présente sensiblement une forme cylindrique creuse et il reçoit une poulie 44 qui est fixée par trois vis 46 sur une collerette 48 formée à l'extrémité libre du manchon 26.

La poulie 44 est ainsi une poulie fixe au sens de l'invention par rapport à laquelle la partie d'extrémité 30 du boîtier d'entraînement 20 tourne dans les deux sens.

Des lumières 50 formées dans la paroi supérieure 52 de la partie d'extrémité 30 du corps 28 du boîtier de transmission 20 permettent d'accéder aux vis de fixation 46.

Un capuchon 54 permet d'accéder aux lumières 50 et aux vis 46 ainsi qu'à des trous 56 formés en regard de trois trous taraudés 58 formés dans le corps de la poulie fixe 44.

Les trous 56 et 58 permettent de monter des vis de blocage temporaire du mécanisme jusqu'à son montage sur le véhicule de manière à immobiliser temporairement en rotation le corps 28 du boîtier d'entraînement 20 par rapport à la poulie 44 et au fourreau 26.

La poulie fixe 44 comporte deux gorges radiales parallèles 60A et 60B.

Le logement central 40 qui s'étend longitudinalement dans la plus grande partie du corps 28 du boîtier d'entraînement 20 reçoit deux câbles de transmission de mouvement 62A et 62B qui sont agencés symétriquement et de manière antagoniste par rapport au plan longitudinal médian M du mécanisme qui passe par l'axe Y-Y de l'arbre d'entraînement 22 et par l'axe géométrique Z-Z d'articulation et d'entraînement en rotation du bras d'essuie-glace 18 par rapport au boîtier d'entraînement 20.

Chacun des deux câbles de transmission 62A, 62B est constitué par une gaine souple 64A, 64B et par une âme constituée par un câble 66A, 66B qui est monté coulissant dans la gaine associée 64A, 64B.

Chacun des câbles de transmission 62A, 62B est ainsi un câble du type poussé-tiré, également appelé câble "BOWDEN".

Une première extrémité 68A, 68B de la gaine souple 62A, 62B est fixée de manière réglable en position longitudinale, selon une technique connue, par un système vis-écrou 70A, 70B sur une cloison transversale 72 du corps 28 du boîtier d'entraînement 20.

Comme cela est représenté sur la figure 5, l'extrémité de la gaine 64A, 64B est également reçue dans une lumière de la paroi 72 de manière à présenter une possibilité de réglage transversale selon la direction T.

L'extrémité opposée 74A, 74B prend appui longitudinalement contre une cloison transversale 76 du corps 28 du boîtier d'entraînement 20.

Chacune des deux gaines souples 64A, 64B présente un contour non rectiligne qui s'étend dans une des deux moitiés du logement 40 délimitées par le plan médian M.

Chacun des deux câbles coulissant 66A, 66B comporte une première extrémité libre 78A, 78B qui est fixée sur la poulie fixe 44.

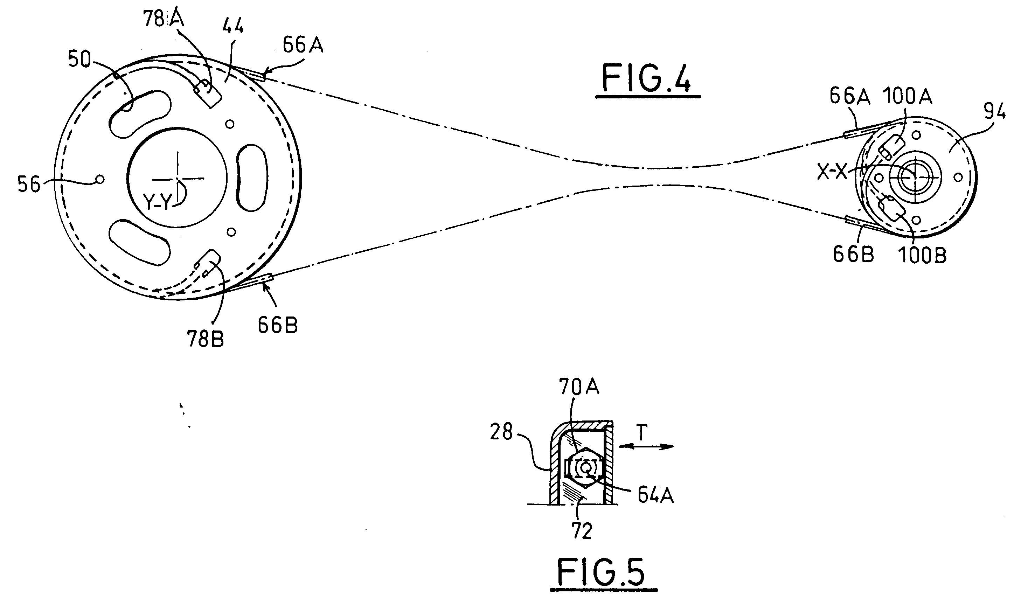

Le tronçon d'extrémité de chacun des câbles coulissants 66A, 66B qui s'étend entre son point de tangence avec la gorge associée 60A, 60B de la poulie fixe 44 et le point de fixation de son extrémité 78A, 78B est enroulé et guidé dans sa gorge associée 60A, 60B sur un angle qui, dans la position intermédiaire de symétrie illustrée aux figures 3 et 4 est sensiblement égal à 165°.

Le troisième logement 42 formé dans la portion d'extrémité de droite 80 du corps 28 du boîtier d'entraînement 20 comporte une virole 82, réalisée venue de matière avec le corps 28, pour le guidage à rotation, autour d'un axe Z-Z parallèle à l'axe Y-Y d'un arbre de sortie 84 du mécanisme de transmission contenu dans le boîtier 20 dont une extrémité conique et moletée 86 sert à l'entraînement en rotation d'une portion d'extrémité en forme de plaque 88 du bras d'essuie-glace 18 qui s'étend en-dessous de la face inférieure du corps 28 du boîtier d'entraînement 20 qui est fermée par une plaque 90.

Le montage à rotation de l'arbre de sortie 84 est par exemple assuré par une douille de palier agencée entre l'arbre 84 et la virole 82.

L'arbre d'entraînement 84 est retenu axialement, avec le bras d'essuie-glace 18, 88 par l'intermédiaire d'un anneau élastique 92 reçu dans une gorge de l'arbre 84.

Le logement 42 est un logement annulaire cylindrique creux qui reçoit une poulie mobile 94 qui est montée à rotation dans le logement 42 et qui est liée en rotation par des vis 96 à la portion d'extrémité 88 du bras d'essuie-glace 18.

La poulie mobile 94 comporte deux gorges radiales parallèles 98A, 98B qui, selon un agencement symétrique à celui de la poulie fixe 44, reçoivent chacune un tronçon d'extrémité opposée du câble coulissant associé 66A, 66B.

Chacune des extrémités 100A, 100B des câbles 66A, 66B qui coulissent dans les gaines 64A, 64B est fixée à la poulie mobile 94.

Du fait de l'utilisation de câbles de transmission souples 62A, 62B, il est possible de décaler axialement les plans dans lesquels s'étendent les paires de gorges 60A, 60B et 98A, 98B.

On décrira maintenant le fonctionnement du mécanisme de transmission en se reportant aux figures 2,3 et 4.

Le mécanisme est illustré dans une position intermédiaire de symétrie par rapport à laquelle il peut se déplacer dans les deux sens de rotation.

Lorsque l'arbre d'entraînement 22 provoque une rotation du boîtier d'entraînement 20 dans le sens horaire (en considérant la figure 3) autour de l'axe Y-Y, le câble coulissant 66A s'enroule d'avantage dans sa gorge 60A autour de la poulie fixe 44 tandis que le câble 66B se déroule par rapport à la poulie fixe 44.

Il se produit donc un déplacement relatif du câble coulissant 66A par rapport à la gaine 64A et à l'intérieur de celle-ci selon la flèche F1 de la figure 3 tandis que le câble coulissant 66B se déplace par rapport à la gaine 64B selon la flèche F2 de la figure 3.

De manière symétrique, les extrémités 100A et 100B des câbles coulissants 66A et 66B qui sont fixés à la poulie mobile 94 provoque une rotation de cette dernière par rapport au corps 28 du mécanisme de transmission 20, à l'intérieur du logement 42 dans le sens anti-horaire autour de l'axe Z-Z, provoquant ainsi une rotation dans le même sens du bras d'essuie-glace 18 par rapport au boîtier d'entraînement 20.

Au cours de cette rotation de la poulie mobile 94, c'est la portion d'extrémité associée du câble coulissant 66B qui s'enroule dans sa gorge 98B tandis que la portion d'extrémité du câble coulissant 66A se "déroule" hors de sa gorge 98A.

On obtient ainsi une transmission synchrone sans glissement du mouvement relatif du boîtier d'entraînement 20 par rapport à la poulie fixe 44 en direction de la poulie 94 qui est mobile par rapport au boîtier d'entraînement 20.

Les mouvements relatifs des différents composants sont inversés lorsque le sens de rotation de l'arbre d'entraînement 22 est inverse.

La course angulaire de la portion d'extrémité 88 du bras d'essuie-glace 18 par rapport à la portion d'extrémité 80 du boîtier d'entraînement 20 est déterminée par le choix des rayons des gorges des poulies.

Le montage de manière réglable des extrémités 68A, 68B des gaines 64A, 64B permet de régler de manière très précise les positions angulaires relatives des différents composants et l'agencement d'une paire de câbles de transmission antagonistes 62A, 62B qui sont tous les deux du type poussé-tiré permet d'assurer avec la plus grande fiabilité possible la transmission de mouvements de manière synchrone sans risque de décalage angulaire entre les mouvements relatifs.

Enfin, l'utilisation de câbles de transmission souples permet de conférer au corps 28 du boîtier d'entraînement 20 diverses formes et profils, notamment en vue de s'adapter à l'essuyage d'une vitre galbée en permettant à cet effet un décalage axial des poulies 44 et 94.

## Revendications

1. Mécanisme d'essuie-glace pour véhicule automobile du type comportant un arbre d'entraînement (22) monté à rotation par rapport à un élément fixe (26) de la structure du véhicule et qui entraîne en rotation un boîtier d'entraînement (20,28) sur lequel un bras d'essuie-glace (18) portant une lame d'essuyage est monté à rotation autour d'un axe (Z-Z) parallèle à l'axe (Y-Y) de l'arbre d'entraînement (22) et qui contient un mécanisme de transmission comprenant une poulie fixe (44) traversée par l'arbre d'entraînement (22) et fixée à l'élément de structure (26), une poulie mobile (94) liée en rotation à un arbre de sortie (84) du mécanisme qui entraîne le bras d'essuie-glace (18, 88) en rotation, et les moyens de transmission du mouvement entre les deux poulies (44, 94), de manière à obtenir un balayage non circulaire de la vitre à essuyer par le bras d'essuie-glace (18), caractérisé en ce que les moyens de transmission comportent au moins une gaine souple (64A) portée par le boîtier (20, 28) et un câble (66A) monté coulissant dans la gaine (64A) et dont chacune des deux extrémités libres (78A, 100A) est fixée respectivement à chacune des deux poulies (44, 94).

2. Mécanisme selon la revendication 1, caractérisé en ce que chacun des deux tronçons d'extrémité du câble coulissant (66A) est reçu dans une gorge (60A, 98A) de guidage formée dans la poulie correspondante (44, 94).

3. Mécanisme selon la revendication 2, caractérisé en ce que les gorges (60A, 98A) des deux poulies (44, 94) sont situées dans des plans décalés axialement.

4. Mécanisme selon l'une quelconque des revendications 1 à 3, caractérisé en ce que l'une au moins (68A) des deux extrémités (68A, 74A) de la gaine souple (64A) est fixée de manière réglable par rapport au corps (28) du boîtier d'entraînement (20).

5. Mécanisme selon l'une quelconque des revendications précédentes, caractérisé en ce que les moyens de transmission comportent deux câbles de transmission antagonistes (62A, 62B) agencés symétriquement par rapport à un plan médian (M) du boîtier (20) passant par les axes (X-X), (Z-Z) des poulies (44, 94).

6. Mécanisme selon l'une quelconque des revendications précédentes, caractérisé en ce que la rotation dans le sens horaire du boîtier d'entraînement (20) par rapport à l'élément de structure (26) du véhicule provoque une rotation dans le sens anti-horaire de l'arbre sortie (86) par rapport au boîtier (28) du mécanisme de transmission.

## Claims

1. Wiper mechanism for a motor vehicle of the type having a drive shaft (22) mounted for rotation with respect to a fixed element (26) of the vehicle structure and which drives in rotation a drive casing (20, 28) on which a wiper arm (18) carrying a wiper blade is mounted for rotation about an axis (Z-Z) parallel to the axis (Y-Y) of the drive shaft (22) and which contains a transmission mechanism comprising a fixed pulley (44) through which the drive shaft (22) passes and which is fixed to the structural element (26), a movable pulley (94) rotatably connected to an output shaft (84) of the mechanism which drives the wiper arm (18, 88) in rotation, and the means of transmitting movement between the two pulleys (44, 94), so as to obtain a non-circular sweep of the window to be wiped by the wiper arm (18); characterised in that the transmission means include at least one flexible sheath (64A) carried by the casing (20, 28) and a cable (66A) which is slidably mounted in the sheath (64A) and each of the two free ends (70A, 100A) of which is fixed respectively to each of the two pulleys (44, 94).

2. Mechanism according to Claim 1, characterised in that each of the two end portions of the sliding cable (66A) is received in a guide groove (60A, 98A) formed in the corresponding pulley (44, 94).

3. Mechanism according to Claim 2, characterised in that the grooves (60A, 98A) in the two pulleys (44, 94) are situated in axially offset planes.

4. Mechanism according to any one of Claims 1 to 3, characterised in that at least one (68A) of the two ends (68A, 74A) of the flexible sheath (64A) is fixed adjustably with respect to the body (28) of the drive casing (20).

5. Mechanism according to any one of the preceding claims, characterised in that the transmission means include two opposing transmission cables (62A, 62B) arranged symmetrically with respect to a mid-plane (M) of the casing (20) passing through the axes (X-X), (Z-Z) of the pulleys (44, 94).

6. Mechanism according to any one of the preceding claims, characterised in that the rotation of the drive casing (20) in the clockwise direction with respect to the structural element (26) of the vehicle causes a rotation of the output shaft (86) in the anti-clockwise direction with respect to the casing (28) of the transmission mechanism.

## Patentansprüche

1. Scheibenwischermechanismus für Kraftfahrzeuge, umfassend eine Antriebswelle (22), die drehbar im Verhältnis zu einem ortsfesten Element (26) der Fahrzeugstruktur gelagert ist und die ein Antriebsgehäuse (20, 28) drehend antreibt, an dem ein Scheibenwischerarm (18), der einen Wischergummi trägt, drehbar um eine zur Achse (Y-Y) der Antriebswelle (22) parallele Achse (Z-Z) gelagert ist und das einen Übertragungsmechanismus enthält, der eine ortsfeste Antriebsscheibe (44), durch die die Antriebswelle (22) hindurchgeht und die am Strukturelement (26) befestigt ist, eine bewegliche Antriebsscheibe (94), die drehend mit einer Ausgangswelle (84) des Mechanismus, die den Scheibenwischerarm (18, 88) drehend antreibt, verbunden ist, und Mittel zur Übertragung der Bewegung zwischen den beiden Antriebsscheiben (44, 94) umfaßt, um eine nichtkreisförmige Wischbewegung zu erzielen, die der scheibenwischerarm (18) auf der zu wischenden Scheibe ausführt , **dadurch gekennzeichnet**, daß die Übertragungsmittel wenigstens eine am Gehäuse (20, 28) gelagerte biegsame Ummantelung (64A) und einen Seilzug (66A) umfassen, der verschiebbar in der Ummantelung (64A) gelagert ist und dessen zwei freie Enden (78A, 100A) jeweils an jeder der beiden Antriebsscheiben (44, 94) befestigt sind.

2. Mechanismus nach Anspruch 1, **dadurch gekennzeichnet,** daß jedes der beiden Endstücke des verschiebbaren Seilzugs (66A) in eine Führungsrille (60A, 98A) eingesetzt ist, die in die entsprechende Antriebsscheibe (44, 94) eingearbeitet ist.

3. Mechanismus nach Anspruch 2, **dadurch gekennzeichnet,** daß sich die Rillen (60A, 98A) der beiden Antriebsscheiben (44, 94) in axial versetzten Ebenen befinden.

4. Mechanismus nach einem der Ansprüche 1 bis 3, **dadurch gekennzeichnet,** daß wenigstens eines (68A) der beiden Enden (68A, 74A) der biegsamen Ummantelung (64A) verstellbar im Verhältnis zum Körper (28) des Antriebsgehäuses (20) befestigt ist.

5. Mechanismus nach einem der vorangehenden Ansprüche, **dadurch gekennzeichnet,** daß die Übertragungsmittel zwei gegenwirkende Übertragungsseilzüge (62A, 62B) umfassen, die symmetrisch im Verhältnis zu einer durch die Achsen (X-X), (Z-Z) der Antriebsscheiben (44, 94) verlaufenden Mittelebene (M) des Gehäuses (20) angeordnet sind.

6. Mechanismus nach einem der vorangehenden Ansprüche, **dadurch gekennzeichnet,** daß die im Uhrzeigersinn erfolgende Drehung des Antriebsgehäuses (20) im Verhältnis zum Strukturelement (26) des Fahrzeugs eine gegen den Uhrzeigersinn erfolgende Drehung der Ausgangswelle (86) im Verhältnis zum Gehäuse (28) des Übertragungsmechnismus bewirkt.
